# FASCICULE DE BREVET EUROPEEN

(11) **EP 1 932 703 B1**
(45) Date de publication et mention de la délivrance du brevet: **02.09.2009**
(21) Numéro de dépôt: 07301625.5
(22) Date de dépôt: 04.12.2007
(51) Int. Cl.: B60J 10/00, B60J 10/08

(54) **Dispositif d'étanchéité pour l'encadrement d'une ouverture pouvant être fermée par un ouvrant d'un véhicule**
Abdichtvorrichtung für den Rahmen einer Öffnung, die von einem Öffnungsflügel eines Kraftfahrzeugs geschlossen werden kann
Sealing device for the frame of an opening that can be closed by a door of a vehicle

(30) Priorité: 15.12.2006 FR 0655572
(43) Date de publication de la demande: 18.06.2008
(73) Titulaire: PEUGEOT CITROËN AUTOMOBILES SA, 78140 Vélizy Villacoublay (FR)
(72) Inventeur: Conan, Jean-Pierre, 92410 Ville d'Avray (FR); Plasson, Claude, 78120 Rambouillet (FR); Musement, Eric, 78990 Elancourt (FR)
(74) Mandataire: Allain, Laurent

(56) Documents cités:
- EP-A- 0 653 332
- EP-A- 1 277 608
- WO-A-98/21061
- FR-A- 1 056 205
- FR-A1- 2 635 366

## Description

La présente invention concerne un dispositif d'étanchéité pour l'encadrement d'une ouverture pouvant être fermée par un ouvrant d'un véhicule.

Le document WO 9821061 décrit un dispositif d'étanchéité pour l'encadrement d'une ouverture pouvant être fermée par un ouvrant d'un véhicule, ledit dispositif comprenant un joint constitué par un profilé en matériau souple.

Elle s'applique de manière non limitative à des véhicules de tourisme et utilitaires.

D'une manière générale, un véhicule est composé d'une caisse et de plusieurs ouvrants, tels que des portières, des volets arrière et des capots, qui sont montés articulés sur la caisse afin d'obturer des ouvertures chacune délimitée par un encadrement.

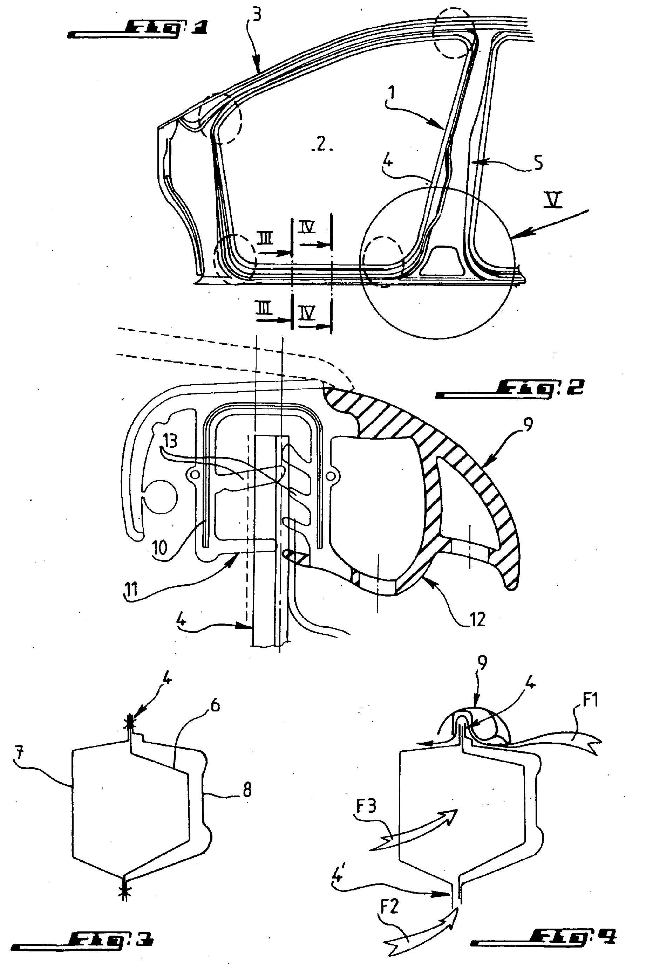

Comme représenté aux figures 1 à 7, l'encadrement 1 de chaque ouverture 2 de la carrosserie 3 du véhicule est pourvu d'une feuillure 4 formée par plusieurs éléments en tôle mis en forme par emboutissage et qui se rejoignent en extrémité de façon jointivement juxtaposée.

Dans le cas de la partie inférieure de l'encadrement 1 à longeron se raccordant à la partie inférieure d'un pied milieu 5 lorsque l'ouverture 2 peut-être obturée par une porte avant, ces éléments en tôle comprennent comme représenté dans les vues en section des figures 3 et 4 un élément intermédiaire de renfort de longeron 6, un longeron intérieur 7 et une pièce appelée côté habitacle 8 du véhicule, la pièce côté habitacle 8 étant disposée en regard de la partie correspondante de doublure de la porte, non représentée.

La feuillure 4 d'entrée de porte est coiffée d'un joint 9 remplissant les fonctions d'étanchéité à l'eau, à la poussière, à l'air (acoustique et odeur), et qui est constitué par un profilé en matériau souple, tel qu'un élastomère, formant pince à section sensiblement en U coiffant et pinçant la feuillure 4. Ces fonctions d'étanchéité du joint 9 entre l'ouvrant et l'encadrement sont assurées aussi bien en statique qu'en roulage du véhicule.

Le joint d'étanchéité 9 comprend une armature interne métallique 10 permettant de cintrer le joint pour l'adapter à la forme de l'encadrement 1 et, solidaire de la partie formant pince 11, un élément tubulaire 12 susceptible de se déformer élastiquement lorsqu'il est comprimé entre l'encadrement 1 et l'ouvrant.

La partie formant pince 11 du joint 9 comprend des lèvres 13 faisant saillie dans la rainure du profilé et venant s'appliquer sur le côté correspondant de la feuillure 4 de manière à assurer le serrage du joint 9 sur la feuillure 4.

La partie formant pince 11 et son armature rigide 10 du joint 9 sont définies pour accepter des épaisseurs de feuillure 4 comprises dans une plage d'épaisseurs déterminées, par exemple de 3,5mm à 5,5mm, pour permettre au joint de pincer efficacement la feuillure 4 lors de sa mise en place sur cette dernière.

Si l'épaisseur de la feuillure 4 est inférieure à la valeur minimale d'épaisseur de la plage ci-dessus, le joint 9 peut pivoter autour de son axe et autoriser une entrée d'eau et de bruits venant de l'extérieur du véhicule et du corps creux de la structure emboutie de l'encadrement 1. Ceci est illustré en particulier aux figures 3 et 4 où la figure 3 représente l'une III-III des sections de l'encadrement 1 de la figure 1 pour lesquelles les éléments en tôle sont joints en extrémité par des points de soudure électrique et la figure 4 montre qu'en dehors des sections de la figure 3, les tôles de ces éléments festonnent, laissant passer de l'eau et de l'air (bruits) de l'extérieur vers l'intérieur du véhicule entre la feuillure 4 et le joint d'étanchéité 9 comme indiqué par la flèche F1.

Ce festonnage se traduit également par une feuillure inférieure 4' non étanche laissant pénétrer l'air comme indiqué par la flèche F2 et, d'autre part, comme indiqué par la flèche F3, du bruit se propage dans le corps creux formé par les éléments côté habitacle 8, renfort de longeron 6 et longeron intérieur 7.

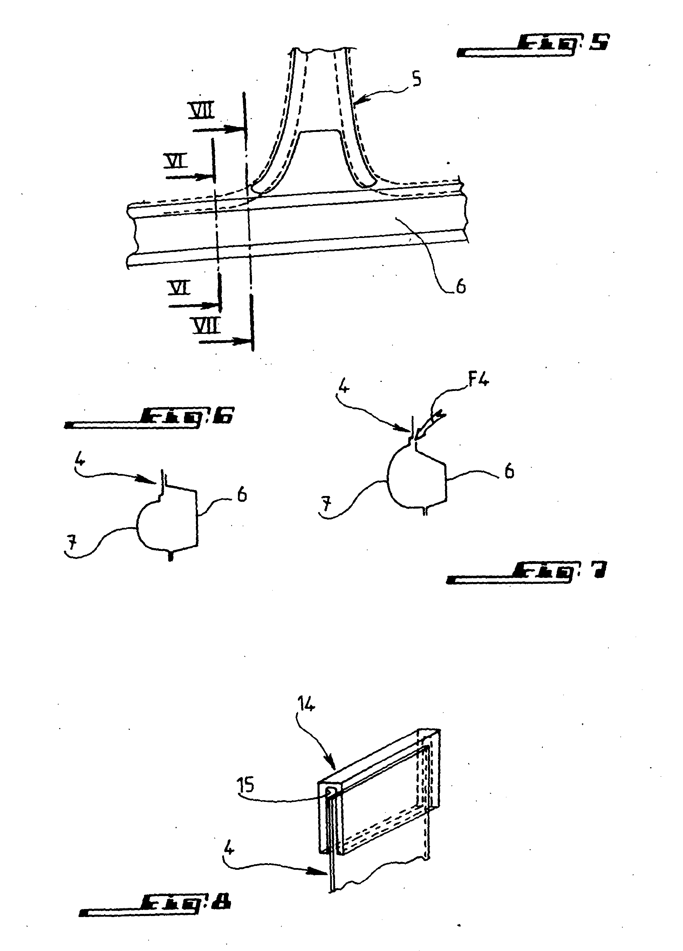

Les figures 5 à 7 illustrent la situation que l'on peut rencontrer sur des véhicules et localisée dans la zone d'entrée de porte avant ou arrière proche de la partie inférieure du pied milieu 5. Ainsi, la figure 7 montre qu'au voisinage de ce pied milieu, la feuillure 4 est réduite à une seule épaisseur, qui est celle du longeron intérieur 7, et sur laquelle le joint vient en appui, la figure 6 montrant que le joint peut venir en appui sur deux tôles.

La raison de cette discontinuité de la ligne d'appui du joint provient du découpage des tôles de la construction technique dans la zone du pied milieu 5. En effet, pour faciliter le chargement en atelier de ferrage (stade d'assemblage comprenant la conformation de la caisse en ligne d'assemblage) de la préparation du côté habitacle sur une plate-forme, on doit assurer un jeu pour ne pas générer d'interférence entre les pièces, dans le cas présent le longeron intérieur avec la doublure de pied central : on ramène les deux sous-ensembles de côté de caisse assemblés comprenant le côté d'habitacle avec l'anneau des doublures assemblé sur la plate-forme.

Cette discontinuité se traduit par une zone dans laquelle de l'eau ruisselant sur le côté habitacle peut pénétrer par capillarité dans le corps creux via la pince du joint d'étanchéité. Dans cette zone on constate également des remontées de bruit se propageant directement dans l'habitacle du véhicule comme indiqué par la flèche F4 en figure 7.

La présente invention a pour but de pallier les inconvénients ci-dessus.

A cet effet, selon l'invention, le dispositif d'étanchéité pour l'encadrement d'une ouverture pouvant être fermée par un ouvrant d'un véhicule, du type comprenant un joint constitué par un profilé en matériau souple, tel qu'un élastomère, formant pince à section sensiblement en U destiné à coiffer et pincer une feuillure de l'encadrement de l'ouverture, et un insert constitué par un profilé en matériau souple, tel qu'un élastomère, formant pince à section sensiblement en U destiné à coiffer et pincer la feuillure, est caractérisé en ce que ledit insert pince et coiffe chaque emplacement de la feuillure d'une épaisseur inférieure à celle des parties restantes de feuillure permettant le montage par pincement du joint qui coiffe et pince chaque insert préalablement monté à l'emplacement de moindre épaisseur de la feuillure.

Avantageusement, l'insert comprend des lèvres faisant saillie dans la rainure du profilé et permettant le serrage de l'insert sur l'emplacement de moindre épaisseur de la feuillure.

Chaque insert peut-être positionné le long de la feuillure à un emplacement de moindre épaisseur par une butée solidaire de la feuillure.

Chaque emplacement de moindre épaisseur est localisé dans des zones courbées de l'encadrement de l'ouverture.

Dans le cas où l'ouvrant est une porte avant ou arrière du véhicule, l'emplacement de moindre épaisseur de la feuillure est localisé au voisinage de la partie inférieure du pied milieu du véhicule.

L'insert est destiné à coiffer et pincer des emplacements de feuillure d'une épaisseur inférieure à 3,5mm et le joint d'étanchéité est destiné à coiffer et pincer les parties restantes de feuillure d'épaisseur comprise entre 3,5mm et 5,5mm, l'insert ayant une épaisseur d'environ 1,5mm.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue de côté d'un encadrement d'une ouverture de porte avant d'un véhicule automobile de l'art antérieur ;
- la figure 2 est une vue en section d'un joint d'étanchéité connu monté sur une feuillure de l'encadrement de la figure 1 ;
- la figure 3 est une vue en section suivant la ligne III-III de la figure 1 ;
- la figure 4 est une vue en section suivant la ligne IV-IV de la figure 1 ;
- la figure 5 est une vue agrandie de la partie cerclée en V de la figure 1 ;
- la figure 6 est une vue en section suivant la ligne VI-VI de la figure 5 ;
- la figure 7 est une vue en section suivant la ligne VII-VII de la figure 5 ; et
- la figure 8 est une vue en perspective d'un insert conforme à l'invention.

En se reportant à la figure 8, la référence 14 désigne un insert constitué par un profilé en matériau souple, tel qu'un élastomère, formant pince à section sensiblement en U et destiné à coiffer et pincer un emplacement de la feuillure d'encadrement 4 délimitant l'ouverture 2 de la caisse 3 de la figure 1 et d'une épaisseur inférieure à l'épaisseur des parties restantes de la feuillure 4 permettant le montage par pincement du joint d'étanchéité 9.

Ainsi, un insert 14 est utilisé pour recouvrir chaque emplacement de feuillure 4 ayant une ou deux épaisseurs de tôle d'une épaisseur totale inférieure à l'épaisseur minimale que doit avoir par ailleurs la feuillure 4 pour permettre au joint d'étanchéité 9 de la serrer par pincement sans pivoter autour de son axe propre.

Dans le cas où une feuillure 4 est constituée normalement de trois épaisseurs de tôle d'une épaisseur totale comprise entre 3,5mm et 5,5mm pour assurer la fixation du joint d'étanchéité 9 sur cette feuillure, chaque insert 14 est apte à recouvrir et pincer une épaisseur locale de feuillure 4 inférieure à 3,5mm. Toutefois, un insert 14 peut recouvrir également une feuillure 4 à trois épaisseurs de tôle qui pourraient présenter une épaisseur totale inférieure à 3,5mm étant donné que les efforts actuels d'allègement des véhicules automobiles tendent à réduire les épaisseurs de tôle.

Une fois qu'un insert 14 est fixé par pincement sur un emplacement localisé de feuillure de moindre épaisseur, le joint d'étanchéité 9 est ensuite monté non seulement sur la feuillure 4 d'épaisseur normale, mais également sur l'insert 14 pour le coiffer et le serrer par pincement.

Chaque insert 14 peut avoir une épaisseur de matière voisine de 1,5mm et épouse le bord du côté habitacle notamment de la partie inférieure d'encadrement dans la zone située au voisinage du pied milieu 5 du véhicule. Chaque insert 14 est monté notamment sur des zones de moindre épaisseur de feuillure 4 se situant dans les parties courbées de l'encadrement 1 indiquées par les parties cerclées en pointillés de la figure 1.

Bien entendu, la longueur de chaque insert 14 est fonction de la longueur de feuillure à recouvrir, une telle longueur pouvant aller de quelques millimètres jusqu'à plusieurs cm (par exemple 5cm) sur certains véhicules.

Pour assurer le maintien d'un insert 14 sur la feuillure 4 de moindre épaisseur, celui-ci peut comporter des lèvres faisant saillie dans la rainure 15 de son profilé et permettant le serrage de l'insert 14 sur l'emplacement de moindre épaisseur de la feuillure 4.

En outre, il est possible de prévoir un moyen permettant de référencer ou positionner chaque insert 14 le long de la partie de feuillure de moindre épaisseur qu'il doit recouvrir. Un tel moyen peut-être constitué par une marque de positionnement réalisée, par exemple, par une butée solidaire de la feuillure 4 et définissant une position d'extrémité de l'insert 14.

## Revendications

1. Dispositif d'étanchéité pour l'encadrement (1) d'une ouverture (2) pouvant être fermée par un ouvrant d'un véhicule, comprenant un joint (9) constitué par un profilé en matériau souple, tel qu'un élastomère, formant pince à section sensiblement en U destiné à coiffer et pincer une feuillure (4) de l'encadrement (1) de l'ouverture (2), et un insert (14) constitué par un profilé en matériau souple, tel qu'un élastomère, formant pince à section sensiblement en U destiné à coiffer et pincer la feuillure (4), **caractérisé en ce que** ledit insert (14) pince et coiffe chaque emplacement de la feuillure (4) d'une épaisseur inférieure à celle des parties restantes de feuillure permettant le montage par pincement du joint (9) qui coiffe et pince chaque insert (14) préalablement monté à l'emplacement de moindre épaisseur de la feuillure (4).

2. Dispositif selon la revendication 1, **caractérisé en ce que** l'insert (14) comprend des lèvres faisant saillie dans la rainure (15) du profilé et permettant le serrage de l'insert (14) sur l'emplacement de moindre épaisseur de la feuillure (4).

3. Dispositif selon la revendication 1 ou 2, **caractérisé en ce que** chaque insert (14) peut être positionné le long de la feuillure (4) à un emplacement de moindre épaisseur par une butée solidaire de la feuillure (4).

4. Dispositif selon l'une des revendications précédentes, **caractérisé en ce que** chaque emplacement de moindre épaisseur est localisé dans des zones courbées de l'encadrement (1) de l'ouverture (2).

5. Dispositif selon l'une des revendications précédentes, où l'ouvrant est une porte avant ou arrière du véhicule, **caractérisé en ce que** l'emplacement de moindre épaisseur de la feuillure (4) est localisé au voisinage de la partie inférieure du pied milieu (5) du véhicule.

6. Dispositif selon l'une des revendications précédentes, **caractérisé en ce que** l'insert (14) est destiné à coiffer et pincer des emplacements de feuillure (4) d'une épaisseur inférieure à 3,5mm et le joint d'étanchéité (9) est destiné à coiffer et pincer les parties restantes de feuillure (4) d'épaisseur comprise entre 3, 5mm et 5,5mm.

7. Dispositif selon la revendication 6, **caractérisé en ce que** l'insert (14) a une épaisseur d'environ 1,5mm.

## Claims

1. Sealing device for the frame (1) of an opening (2) that can be closed by an opening element of a vehicle, comprising a seal (9) consisting of a section made of flexible material, such as an elastomer, forming a grip with a substantially U-shaped section designed to cover and grip a rebate (4) of the frame (1) of the opening (2), and an insert (14) consisting of a section made of flexible material, such as an elastomer, forming a substantially U-shaped grip designed to cover and grip the rebate (4), **characterized in that** the said insert (14) grips and covers each location of the rebate (4) with a thickness that is less than that of the remaining portions of rebate allowing the mounting, by gripping, of the seal (9) which covers and grips each insert (14) previously mounted in the location of least thickness of the rebate (4).

2. Device according to Claim 1, **characterized in that** the insert (14) comprises lips protruding into the groove (15) of the section and allowing the insert (14) to be squeezed on the location of least thickness of the rebate (4).

3. Device according to Claim 1 or 2, **characterized in that** each insert (14) can be positioned along the rebate (4) in the location of least thickness by a stop secured to the rebate (4).

4. Device according to one of the preceding claims, **characterized in that** each location of least thickness is located in curved zones of the frame (1) of the opening (2).

5. Device according to one of the preceding claims, in which the opening element is a front or rear door of the vehicle, **characterized in that** the location of least thickness of the rebate (4) is located in the vicinity of the lower portion pillar (5) of the vehicle.

6. Device according to one of the preceding claims, **characterized in that** the insert (14) is designed to cover and grip locations of rebate (4) with a thickness less than 3.5 mm and the seal (9) is designed to cover and grip the remaining portions of rebate (4) with a thickness of between 3.5 mm and 5.5 mm.

7. Device according to Claim 6, **characterized in that** the insert (14) has a thickness of approximately 1.5 mm.

## Patentansprüche

1. Dichtvorrichtung für den Rahmen (1) einer Öffnung (2), die mit einem Öffnungsflügel eines Fahrzeugs geschlossen werden kann, mit einer Dichtung (9), die aus einem Profil aus flexiblem Material wie einem Elastomer besteht, die eine Klammer mit einem im Wesentlichen U-förmigen Querschnitt bildet und dazu bestimmt ist, einen Falz (4) des Rahmens (1) der Öffnung (2) zu überragen und einzuklemmen, und einer Einlage (14), die aus einem Profil aus flexiblem Material wie einem Elastomer besteht, die eine Klammer mit einem im Wesentlichen U-förmigen Querschnitt bildet und dazu bestimmt ist, den Falz (4) zu überragen und einzuklemmen, **dadurch gekennzeichnet, dass** die Einlage (14) jede Stelle des Falzes (4) überragt und einklemmt, die dünner als die übrigen Falzteile ist, wodurch die Montage der Dichtung (9) durch Einklemmen gestattet wird, die jede Einlage (14), die zuvor an der Stelle mit geringerer Dicke des Falzes (4) montiert wurde, überragt und einklemmt.

2. Vorrichtung nach Anspruch 1, **dadurch gekennzeichnet, dass** die Einlage (14) Lippen umfasst, die in die Nut (15) des Profils vorragen und das Festklemmen der Einlage (14) an der Stelle mit geringerer Dicke des Falzes (4) gestatten.

3. Vorrichtung nach Anspruch 1 oder 2, **dadurch gekennzeichnet, dass** jede Einlage (14) entlang dem Falz (4) durch einen fest mit dem Falz (4) verbundenen Anschlag an einer Stelle mit geringerer Dicke positioniert werden kann.

4. Vorrichtung nach einem der vorhergehenden Ansprüche, **dadurch gekennzeichnet, dass** sich jede Stelle geringerer Dicke in den gekrümmten Bereichen des Rahmens (1) der Öffnung (2) befindet.

5. Vorrichtung nach einem der vorhergehenden Ansprüche, bei der es sich bei dem Öffnungsflügel um eine vordere oder hintere Tür des Fahrzeugs handelt, **dadurch gekennzeichnet, dass** sich die Stelle mit geringerer Dicke des Falzes (4) in der Nähe des unteren Teils des Mittelpfostens (5) des Fahrzeugs befindet.

6. Vorrichtung nach einem der vorhergehenden Ansprüche, **dadurch gekennzeichnet, dass** die Einlage (14) dazu bestimmt ist, Stellen des Falzes (4) mit einer Dicke von weniger als 3,5 mm zu überragen und einzuklemmen, und die Dichtung (9) dazu bestimmt ist, die übrigen Teile des Falzes (4) mit einer Dicke zwischen 3,5 mm und 5,5 mm zu überragen und einzuklemmen.

7. Vorrichtung nach Anspruch 6, **dadurch gekennzeichnet, dass** die Einlage (14) ungefähr 1,5 mm dick ist.
